Europäisches Patentamt

European Patent Office

Office européen des brevets

(11) Publication number: **0 357 462**
A2

# EUROPEAN PATENT APPLICATION

(21) Application number: **89308904.5**

(51) Int. Cl.⁵: **B 60 C 11/04**

(22) Date of filing: **01.09.89**

(30) Priority: **02.09.88 JP 219733/88**
**02.05.89 JP 112995/88**

(43) Date of publication of application:
**07.03.90 Bulletin 90/10**

(84) Designated Contracting States:
**DE ES FR GB IT LU**

(71) Applicant: **Bridgestone Corporation**
**10-1, Kyobashi 1-Chome Chuo-Ku**
**Tokyo 104 (JP)**

(72) Inventor: **Yoshida, Masahiro**
**4-4, Ogawahigashi-Cho 3-Chome**
**Kodaira City Tokyo (JP)**

**Hiruma, Masato**
**5-5, Ogawahigashi-Cho 3-Chome**
**Kodaira City Tokyo (JP)**

**Nakajima, Yukio**
**3-2, Ogawahigashi-Cho 3-Chome**
**Kodaira City Tokyo (JP)**

(74) Representative: **Whalley, Kevin et al**
**MARKS & CLERK 57/60 Lincoln's Inn Fields**
**London WC2A 3LS (GB)**

(54) Pneumatic tires.

(57) A pneumatic tire having at least one block row (18, 19, 20) in a tread portion (1) is disclosed. The block row is constituted by a number of blocks (15, 16, 17) spaced from one another in a circumferential direction, and the blocks are defined by a number of transverse grooves (12, 13, 14) spaced in the circumferential direction. The tire satisfies the following equation:
$$A = \tan^{-1}(sP/W \pm \tan B)$$
in which A is an inclined angle of each of the transverse grooves relative to a straight line ($\ell$) orthogonal to a tire equatorial plane (8), and W and P are an axial width and a circumferential pitch of each of the blocks, s is a positive integer of 3 or less, and B is a cross angle between a tangent (24) to a front side edge of a ground contact shape on a treading side at a point of intersection (23) between the front side edge and a widthwise center (22) of the blocks and the straight line ($\ell$) orthogonal to the tire equatorial plane (8), respectively.

FIG. I

FIG. 2

**Description**

## PNEUMATIC TIRES

The present invention relates to pneumatic tires each having a number of blocks on a tread portion

In order to reduce ear-offensive feeling of noises of pneumatic tires by converting the noises to white noises, a so-called pitch variation technique is adopted, in which each of a plurality of ribs provided on a tread portion is constituted by plural kinds of blocks having respectively different pitches in a circumferential direction, and plural kinds of the blocks are arranged successively in the circumferential direction, while each of the plural kinds of the blocks are placed in order a specific number by a specific number.

However, when such a pitch variation technique is applied to a pneumatic tire, tire noises are converted to white noises to reduce offensive feeling to the ear. However, since a sound pressure level of the noises itself does not almost decrease, there remains a problem in that noises cannot effectively be reduced.

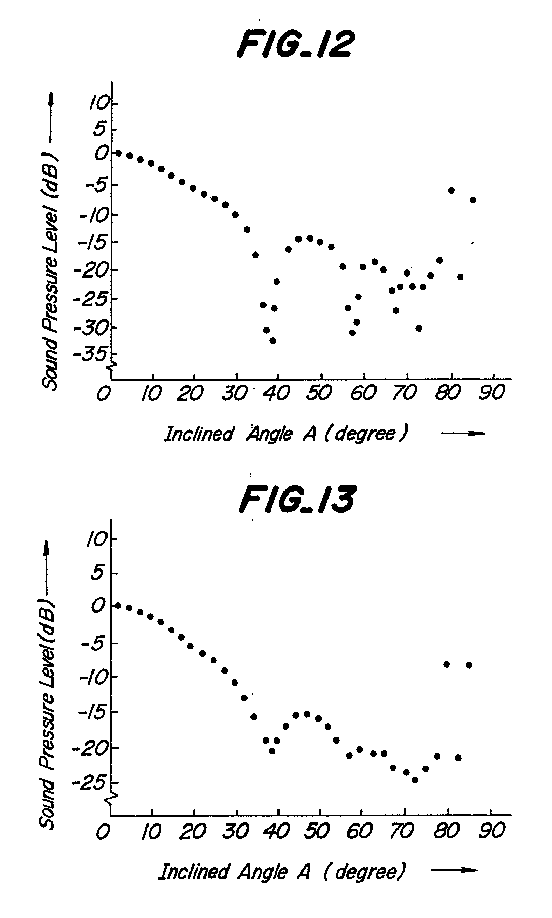

Under the circumstances, the present inventors have repeatedly made strenuous studies to reduce the sound pressure level itself. During the studies, as shown in Fig. 11, a single block row 62 was constituted by arranging a number of blocks 61 in a circumferential direction, an inclined angle A of transverse grooves between the blocks 61 relative to a tire axial direction was finely changed while a width W and a circumferential pitch P of the blocks 61 were kept constant, and the sound pressure level of a tire hitting a road was determined at each of varied inclined angles A by simulation. As shown in Fig. 12, it was revealed that the sound pressure level rapidly dropped at a few locations when the inclined angle took certain values. In the above simulation, the entire length of the block row 62, that is, its circumferential length was 1,971 mm, and the total number of the blocks 61 in the block row 62 was 60. The width and the circumferential pitch P of each of the blocks 61 were 42 mm and 32.85 mm, respectively, while a running speed was 100 km/h. Here, the circumferential pitch P of each of the blocks 61 is a circumferential distance between a front edge of the block 61 on a treading side to that of a neighboring block, on a treading side, next contacting road. The inventors have repeatedly continued their studies, and finally discovered that the sound pressure most drops when the inclined angle A is equal to a value of $\tan^{-1}$ (sP/w).

The present invention has been accomplished based on the above-mentioned knowledge, and is to provide a pneumatic tire having at least one block row on a tread portion, which block row is constituted by a number of blocks spaced from one another in a circumferential direction and in which the blocks of the block row are defined by a number of transvere grooves spaced in the circumferential direction, the tire satisfying the following equation:
$$A = \tan^{-1} (sP/W \pm \tan B)$$
in which A is an inclined angle of each of the transverse grooves relative to a straight line orthogonal to the tire equatorial plane, and W, P, s and B are the width and the circumferential pitch of each of the blocks, a positive integer of 3 or less, and a cross angle between a tangent to a front side edge of a ground contact shape on a treading side at a point of intersection between the front side edge and a widthwise center of the blocks and the straight line orthogonal to the tire equatorial plane, respectively. The reason why s is 3 or less is that if it is more than 3, the inclined angle A becomes near 90° so that driving forces and braking forces become conspicuously lower during running and that the tire cannot practically be used. Further, the reason why the cross angle B is involved in the above equation is that the ground contact shape of the pneumatic tire is generally curved on the front edge of the treading side, and that influences due to such a curving are taken into consideration. As shown in Fig. 12, when the blocks are all of a single pitch, that is, when the transverse grooves are spaced circumferentially by an equal distance,the effect of reducing the sound pressure level is very remarkable. Even if the so-called pitch variation is applied to the above blocks, as shown in Fig. 13, the sound pressure level-reducing effect can be recognized to a considerable extent, although slightly lower than in the mono-pitch type. Fig. 13 shows results of a simulation for the sound pressure level, in which the number of the blocks was 60, the circumferential pitch of fifteen blocks among the 60 blocks was large, that of the succeeding fifteen blocks was medium, that of the further succeeding fifteen blocks was small, and that of the final fifteen blocks was medium. In this manner, when the pitch variation is applied, the inclined angle A successively changes following changes in the circumferential pitch, but the sound pressure level-reducing effect can be obtained. Further, when the tire is of the mono-pitch type, the sound pressure level-reducing effect becomes more conspicuous due to the constant inclined angle.

According to the present invention, in the pneumatic tire comprising a block row consisting of a number of the blocks which are arranged in the circumferential direction while being circumferentially spaced from adjacent ones by the pitch P, the inclined angle A of the transverse grooves between the blocks relative to the straight line orthogonal to the tire equational plane is set at the value determined by the above-mentioned expression. Thus, a point of time when a certain block hits a road and a point of time when another block hits it form such a timing that sounds generated by them may be offset due to interference between hitting sounds thereof. Thereby, the sound pressure level of the noises is reduced. As mentioned above, such a reduction in the sound pressure level is very conspicuous in the case of the mono-pitch type, but the sound pressure level is also reduced to some degree in the case of the pitch variation type.

These and other objects, features and advantages

2

of the invention will be appreciated upon reading of the following description of the invention when taken in conjunction with the attached drawings, with the understanding that some modifications, variations and changes of the same could be made by the skilled person in the art to which the invention pertains without departing from the spirit of the invention or the scope of claims appended hereto.

For a better understanding of the invention, reference is made to the attached drawings, wherein:

Fig. 1 is a plane view of a tread portion illustrating a first embodiment of the present invention;

Fig. 2 is a schematic view illustrating a ground contact shape of a pneumatic tire shown in Fig. 1;

Fig. 3 is a view illustrating a ground contact shape of a second embodiment according to the present invention;

Fig. 4 is a plane view of a tread portion of a pneumatic tire shown in Fig. 3;

Fig. 5 is a plane view of a tread portion of a third embodiment according to the present invention;

Fig. 6 is a plane view of a tread portion illustrating a fourth embodiment according to the present invention;

Fig. 7 is a partial plane view of a tread portion of a fifth embodiment according to the present invention;

Fig. 8 is a diagram showing simulation results between the inclined angle of the transverse groove and the sound pressure level of noises with respect to tires to which a pitch variation is applied;

Fig. 9 is a plane view of a tread portion illustrating Comparative Tire 5 used in a noise test;

Fig. 10 is an arrangement view illustrating an arrangement of pitches in a block row of the above Comparative Tire 5;

Fig. 11 is a plane view illustrating a block row employed to simulate the relationship between the inclined angle of the transverse grooves and the sound pressure level of noises;

Fig. 12 is a diagram illustrating simulation results obtained by employing the block row in Fig. 11; and

Fig. 13 is a diagram showing simulation results similar to those in Fig. 11 when using block rows to which a pitch variation is applied.

Now, the first embodiment according to the present invention will be explained with reference to the drawings.

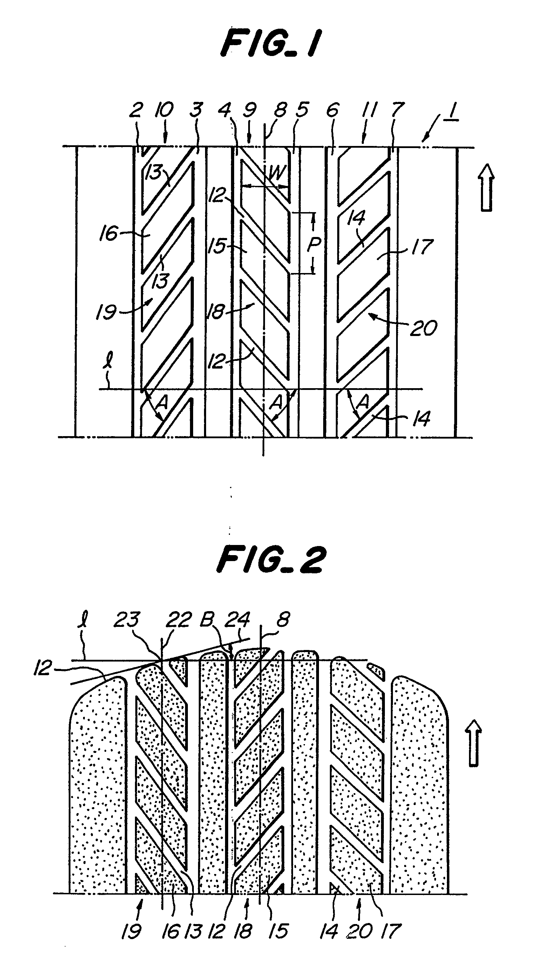

In Fig. 1, a reference numeral 1 is a tread portion of a pneumatic tire. The tread portion 1 is provided with a plurality of continuous main grooves 2, 3, 4, 5, 6 and 7 extending in a circumferential direction. These main grooves 2, 3, 4, 5, 6 and 7 are spaced in an axial direction of the pneumatic tire. A central rib 9 which is defined by the main grooves 4, 5 and located along an equatorial plane 8 of the tire, and a side rib 10 and a side rib 11 which are defined by the main grooves 2, 3 and the main grooves 6, 7 on opposite sides of the central rib 9, respectively, are formed with a number of transverse grooves 12, 13 and 14 equally spaced in the circumferential direction. As a result, a number of blocks 15, 16 and 17 are spaced by the transverse grooves 12, 13 and 14 in the circumferential direction, and are formed in the center rib 9, and the side ribs 10 and 11, respectively. The blocks 15, 16 or 17 has the same shape. The numerous blocks 15 located on the central rib 9, the numerous blocks 16 on the side rib 10, and the numerous blocks 17 on the side rib 11 as a whole form the block rows 18, 19 and 20, respectively. An inclined angle of the transverse grooves 12, 13 and 14 with respect to a straight line $\ell$ orthogonal to the tire equatorial plane 8, that is, the inclined angle A with respect to the axial direction of the tire, is set equal to the following expression:

$$\tan^{-1} (sP/W \pm \tan B)$$

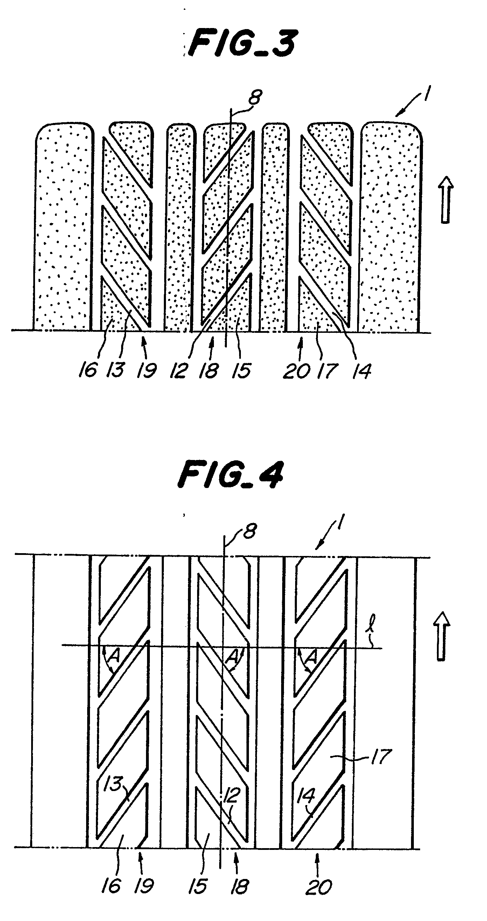

in which W, P, s and B are the width and the circumferential pitch of each of the blocks 15, 16 and 17, that is, the circumferential distance from a front edge of the block 15, 16, 17 on a treading side to that of a next ground-contacting block 15, 16, 17 on a treading side, and a positive integer of 3 or less, respectively. The reason why the value of s is set at 3 or less is that if it is 4 or more, the inclined angle A becomes near 90° so that driving forces or braking forces conspicuously lower during running and that the tire cannot practically be used. In the above expression, as shown in Fig. 2, B is a cross angle between a tangent 24 and a straight line $\ell$. The tangent 24 is drawn to a front edge 21 of a ground contact shape of the pneumatic tire on a treading side at an intersection 23 between the front edge 21 and a widthwise center 22 of any blocks 15, 16 or 17 (the blocks 16 are exemplified in this embodiment), and a straight line $\ell$ is orthogonal to the tire equatorial plane 8. Since the front edge 21 on the treading side of the ground contact shape of the pneumatic tire is generally curved, $\pm \tan B$ is inserted into the expression considering influences due to the curving of the front edge 21 on the treading side. A deviation in treading timing between one widthwise end of the block 15, 16, 17 and the other widthwise end is corrected by $\pm \tan B$. For example, when the circumferential pitch P, the width W, s and B in the block 16 or 17 are 28.4 mm, 24.0 mm, 1 and 10 degrees, respectively, the inclined angle A of the transverse groove 12 is 49.8 degrees. For, the transverse groove 12 is located on the equatorial plane 8 of the tire, and thus no correction is necessary. The inclined angle A of the transverse groove 13 positioned on the left side of the tire equatorial plane 8 is increased to 53.7 degrees due to influences of the front edge on the treading side. Further, the inclined angle A of the transverse groove 14 on the right side of the tire equatorial plane 8 is decreased to 45.2 degrees due to influences of the front edge 21 on the treading side. As in the second embodiment shown in Fig. 3, when the ground contact shape of the pneumatic tire is approximately rectangular, a value "0" is substituted for the cross angle B. When the cross angle is 0 degree in this case, the inclined angles A of the transverse grooves 12, 13 and 14 are the same as shown in Fig. 4, and each of the transverse grooves 12, 13 and 14 are the same as shown in Fig. 4, and each of the transverse grooves 12, 13 and 14 is positioned in a diagonal of a rectangle having a width W and a circumferential length P. When the s is 2, each of the transverse grooves is positioned on a diagonal of a rectangle having a width W and a circumferential length 2P. When the s is 3, each of the transverse grooves is positioned on a diagonal having a width W and a circumferential length 3P. Turning to Fig. 1 again, the inclined direction of the transverse grooves 12 in the central rib 9 with respect to the tire equatorial plane 8 is reverse to that of the transverse grooves 13 and 14 of the side ribs 10 and 11, respectively, with respect to the tire equatorial plane 8. In such a mono-pitch type tire, since the inclined angles A of the transverse grooves 12, 13 and 14 between the blocks 15, 16, 17, respectively, with respect to the tire equatorial plane are set at values determined by the above-mentioned expression, the point of time when a certain block 15, 16, or 17 hits the road is staggered from the point of time when another block 15, 16 or 17 hits the road by such a timing that their hitting sounds may be interfered and offset with each other. Consequently, the sound pressure level of noises decreases. In this case, since the inclined angles A of the transverse grooves 12, 13 and 14 with respect to the tire equatorial plane 8 are not so great, driving forces or braking forces do not almost lower during running.

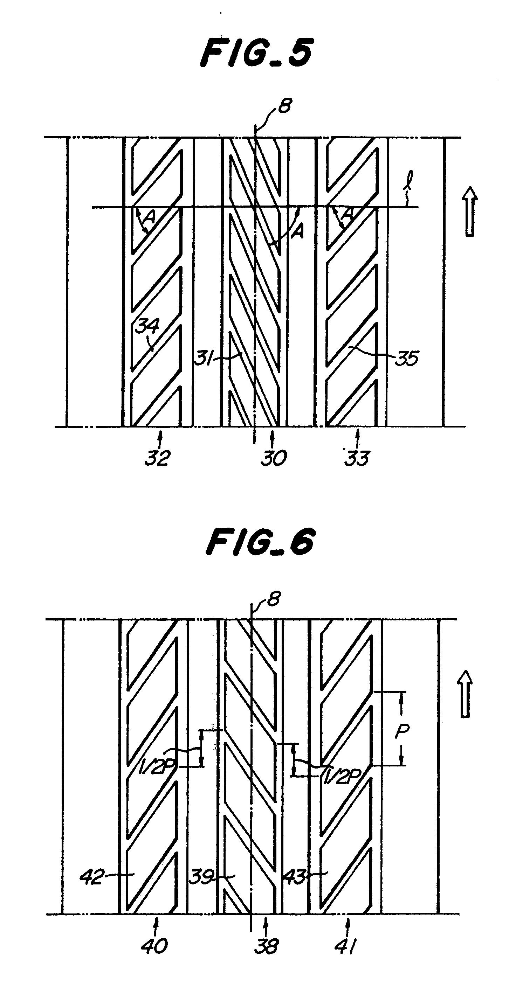

In the above-mentioned first embodiment, the inclined angles A of the transverse grooves in all the block rows were determined by substituting the same value, i.e., 1 for s, but the inclined angles A of the transverse grooves in the respective block rows may be determined by substituting different values for s. For instance, as in the third embodiment of Fig. 5, it may be that the inclined angle A of the transverse grooves 31 of the central block row 30 is determined to be 67.1 degrees by substituting 2 for s, and that the inclined angle A of transverse grooves 34 and 35 of the opposite side block rows 32 and 33, respectively is determined to be 49.8 degree by substituting 1 for s. In this case, the other conditions are the same as in Fig. 4. According to the present invention, as in the fourth embodiment of Fig. 6, blocks 39 in a central block row 38 may be staggered from blocks 42 and 43 in opposite side block rows 40 and 41 by 1/2 of a circumferential pitch P in the circumferential direction. By so doing, generated noises further interfere with one another so that the sound pressure level of the noises further lower. When the blocks are staggered in terms of "pitch" as mentioned above, those in the central block row 38 may be staggered from those in the opposite side block rows 40 and 41 by 1/4 P. Alternatively, it may be that while the blocks in the central block row 38 are staggered from those in the side block 40 by 1/2 P, the blocks in the central block row 38 are staggered from those in the other side block row 41 by 1/4 P.

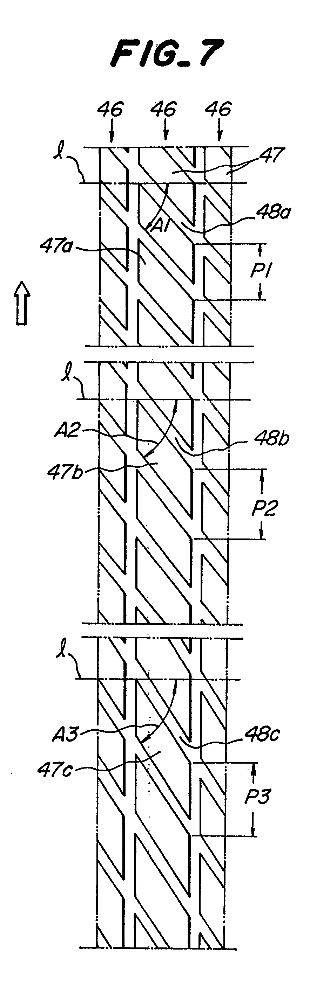

Fig. 7 is a schematic view illustrating the fifth embodiment according to the present invention. In this embodiment, a pitch variation is applied to blocks 47 in each of block rows 46. That is, the blocks 47 of each of the block rows 46 are constituted by three kinds of blocks 47a, 47b and 47c having different circumferential pitches P1, P2 and P3, respectively. The circumferential pitches P1, P2 and P3 of the block 47a (small block), the block 47b (medium block) and the block 47c (large block), respectively, are set at 28.05 mm, 33 mm, and 37.94 mm, respectively. Circumferentially successively are arranged ten blocks 47a, four blocks 47b, four blocks 47c, five blocks 47b, five blocks 47a, two blocks 47b, ten blocks 47c, two blocks 47b, four blocks 47a, four blocks 47b, seven blocks 47c, and three blocks 47b to form each block row 46. Therefore, the total number of the blocks in each block row 46 is 60, and the entire circumferential length of the tire is 1,989.9 mm. As mentioned above, since the blocks 47 have the different circumferential pitches P1, P2 and P3, inclined angles A1, A2 and A3 of transverse grooves 48a, 48b and 48c positioned between the blocks 47 relative to a straight line $\ell$ differ from one another. In this embodiment, since the width W is 25 mm, the inclined angles A1, A2 and A3 are 48.3 degrees, 52.9 degrees, and 56.6 degrees, respectively, and s and B were set at 1 and 0, respectively.

Next, a first noise test will be explained.

In this test, a test tire 1 having the tread pattern shown in Fig. 7, and Comparative tires 1, 2, 3 and 4 were prepared. In Comparative tires, the width of blocks, the circumferential pitch, and the arranging order were the same as those in Test tire 1, respectively, except that the inclined angle only differ therebetween. The inclined angles of the transverse grooves in Comparative tires 1, 2, 3 and 4 were determined by using the following expression. -6 mm, -3 mm, 3 mm and 6 mm were substituted for h with respect to Comparative tires 1, 2, 3 and 4, respectively.

$$\tan^{-1}\{s(P + h)/W \pm \tan B\}$$

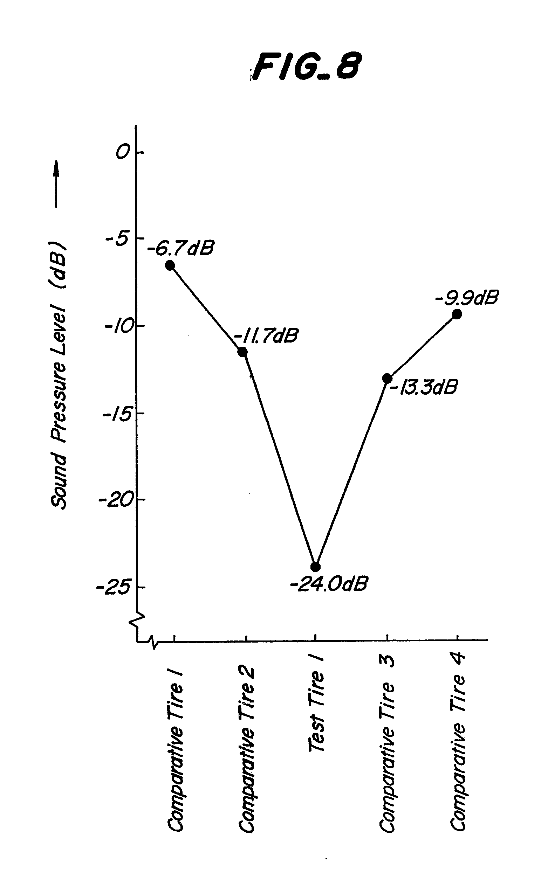

Therefore, in Comparative tires 1, 2, 3 and 4, the inclined angles of the small blocks were 41.4 degrees, 45.1 degrees, 51.2 degrees, and 53.7 degrees, respectively, and those of the medium blocks were 47.2 degrees, 50.2 degrees, 55.2 degrees, and 57.3 degrees, respectively. Furthermore, the inclined angles of the large blocks were 52.0 degrees, 54.4 degrees, 58.6 degrees, and 62.0 degrees, respectively. Next, sound pressure levels of noises in Test tire 1 and Comparative tires 1, 2, 3 and 4 during running in an audible range (100 to 3,000 Hz) were determined by simulation. Results are shown in Fig. 8. As compared with Comparative tires 1, 2, 3 and 4, the sound pressure level of Test tire 1 greatly lowered, and particularly it was lower than that of Comparative tire 1 by as much as 17.3 dB.

Next, a second noise test will be explained.

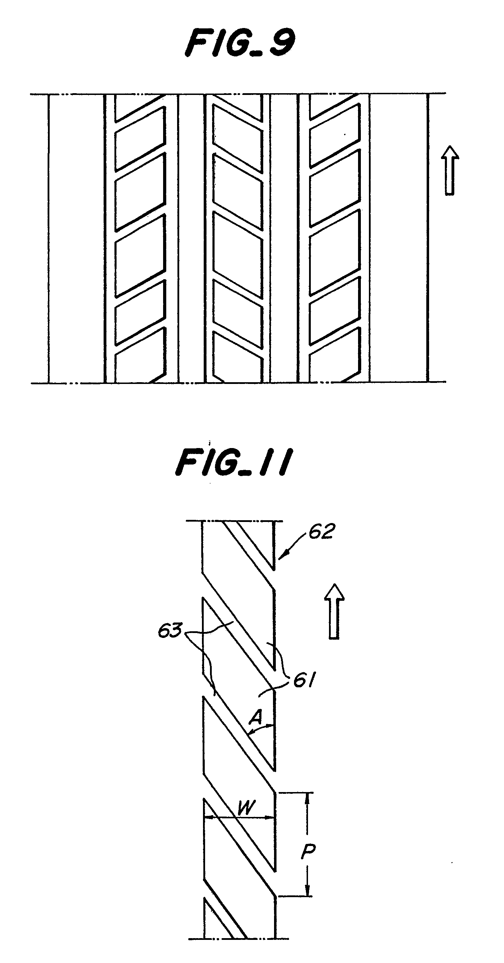

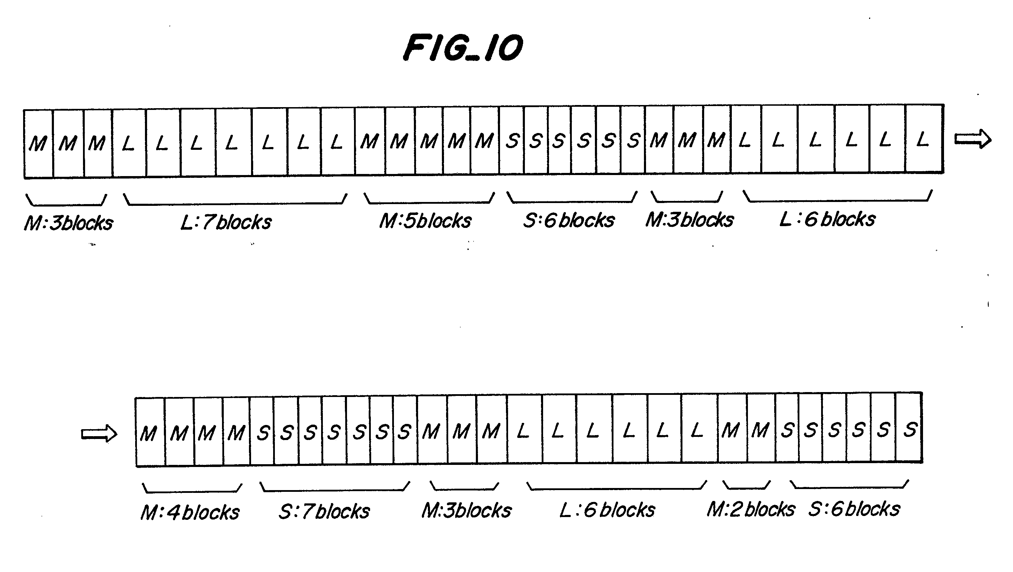

In this test, Test tire 2 having a tread pattern shown in Fig. 1 referred to above and Comparative tire 5 to which a pitch variation shown in Fig. 9 was applied were prepared. In Test tire 2, the width W of each block, the circumferential pitch P, s and a cross angle B were 24.0 mm, 28.4 mm, 1, and 10 degrees, respectively. As a result, in Test tire 2, as mentioned above the inclined angle A of the transverse grooves 12 in the block row 18, that of the transverse grooves 13 in the block row 19, and that of the transverse grooves 14 in the block row 20 were 49.8 degrees, 53.7 degrees, and 45.2 degrees, respectively. On the other hand, in Comparative tire 5, each block row is constituted by arranging three kinds of blocks, that is, small, medium and large blocks having circumferential pitches P of 28.7 mm, 33.8 mm and 38.9 mm, respectively, in the manner shown in Fig. 10. The width w of the blocks and the cross angle B were uniformly 24.0 mm and 10 degrees, respectively. In Comparative tire 1, the inclined angle of each of the transverse grooves was set constant at 30 degrees different from a value obtained by substituting the above-mentioned numerical values for s, p, W and B in tan⁻¹ (sP/W ± tan B), the tire size of these tires was both 205/60R15. Next, each of Test tire 2 and Comparative tire 5 was let to drift on a drum from a speed of 100 km/h until a speed of 40 km/h. At that time, the average sound pressure level of generated noises, that is, a total average value on the drum was measured. As a result, the sound pressure level in Test tire 2 was 72.2 dB, while it was 74.0 dB in the conventional tire 5. Thus, the sound pressure level of Test tire 2 was lower as compared with that in Comparative tire 5 by 1.8 dB. Furthermore, each of such Test tire 2 and Comparative tire 5 was fitted to a passenger car, and subjected to driver's feeling test for noises by running it. A result of Comparative tire 5 was indicated as 110 by index, that of Test tire 2 being 100. Thus, the tire according to the present invention was proved to be better with respect to feeling estimation.

Next, a third noise test will be explained.

In this test, Test tire 3 having a tread pattern shown in Fig. 4, Test tire 4 having a tread pattern shown in Fig. 5, and Comparative tire 5 to which the pitch variation was applied were prepared. In Test tire 3, the width w of each block, the circumferential pitch P, and s were 24.0 mm, 33.8 mm, and 1, respectively. Since Test tire 3 has a substantially rectangular ground contact shape as shown in Fig. 3, a cross angle B was 0 degree. As a result, the inclined angle was equally 54.6 degrees with respect to all transverse grooves 12, 13 and 14 in block rows 18, 19 and 20, respectively. On the other hand, in Test tire 4, the width W of each block, and the circumferential pitch P were 24.0 mm and 28.4 mm, respectively, and s was set at 2 for a block row 30, and 1 for block rows 32 and 33. The cross angle B in Test tire 4 was 0 degree as in Test tire 3. As a result, in Test tire 4, the inclined angles A of the transverse grooves 31 in the block 30 and that of the transverse grooves 34 and 35 in and the blocks 32 and 33 were 67.1 degrees and 49.8 degrees, respectively. The tire size of both Test tires 3 and 4 was 205/60R15. Next, with respect to Test tires 3 and 4 and Comparative tire 5, the sound pressure levels of noises generated on the drum, that is, a total average values on the drum were measured. Results were 72.0 dB for Test tire 3 and 72.2 dB for Test tire 4. Therefore, the sound pressure levels of Test tires 3 and 4 could be lowered by 2.0 dB and 1.8 dB, respectively, as compared with that of Comparative tire 5. Thus, tire noises could be reduced. Such Test tires 3 and 4 were subjected to the feeling test. When a result of Comparative tire 5 was indicated as 100 by index, those of Test tires 3 and 4 were both 110. Thus, Test tires 3 and 4 were better than Comparative tire 5 with respect to the feeling test. As mentioned above, even when the cross angle B is 0 or even when blocks having different values s are combined together, noises can assuredly be reduced.

Next, a fourth noise test will be explained.

In this test, the above Test tire 3 and Test tire 5 having a tread pattern shown in Fig. 6 were prepared. Test tire 5 is the same as Test tire 3, except that blocks 42 and 43 of block rows 40 and 41, respectively, were staggered from the block 39 of the block row 38 by 1/2 of a circumferential pitch of 33.8 mm of the blocks, that is, 16.9 mm in the circumferential direction. By staggering the pitch like this, the sound pressure level of noises of Test tire 5 on the drum could be reduced as compared with Test tire 3 by as much as 3.9 dB.

As mentioned above, according to the present invention, the sound pressure level of noises can certainly be reduced.

**Claims**

1. A pneumatic tire having a tread portion (1) provided with at least one block row (18, 19, 20), said block row being constituted by a number of blocks (15, 16, 17) spaced from one another in a circumferential direction, said blocks of the block row being defined by a number of transverse grooves (12, 13, 14) spaced in the circumferential direction, said tire satisfying the following equation:

A = tan⁻¹ (sP/W ± tan B)

in which A is an inclined angle of each of the transverse grooves relative to a straight line (ℓ) orthogonal to a tire equatorial plane (8), W and P are an axial width and a circumferential pitch of each of the blocks, s is a positive integer of 3 or less, and B is a cross angle between a tangent (24) to a front side edge of ground contact shape on a treading side at a point of intersection (23) between the front side edge and a widthwise center (22) of the blocks and the straight line (ℓ) orthogonal to the tire equatorial plane (8), respectively.

2. A pneumatic tire as claimed in claim 1, characterized in that the transverse grooves are spaced from one another by an equal distance.

## FIG_1

## FIG_2

# *FIG_3*

# *FIG_4*

**FIG. 5**

**FIG. 6**

FIG_7

# FIG. 8

# FIG_9

# FIG_11

# FIG_10

M M M L L L L L L L M M M M M S S S S S S M M M L L L L L L ⇒

M:3blocks    L:7blocks    M:5blocks    S:6blocks    M:3blocks    L:6 blocks

⇒ M M M M S S S S S S S M M M L L L L L L L M M S S S S S S

M:4blocks    S:7blocks    M:3blocks    L:6 blocks    M:2blocks    S:6blocks

EP 0 357 462 A2

# FIG.12

# FIG.13